# EUROPÄISCHE PATENTSCHRIFT

(11) **EP 3 617 387 B1**
(45) Veröffentlichungstag und Bekanntmachung des Hinweises auf die Patenterteilung: **26.07.2023**
(21) Anmeldenummer: 19204095.4
(22) Anmeldetag: 20.12.2016
(51) Int. Cl.: D06F 55/02

(54) **KLAMMER FÜR WÄSCHESTÜCKE UND VERFAHREN ZUM EINHÄNGEN VON WÄSCHESTÜCKEN IN EINE KLAMMER**
CLIP FOR CLOTHES AND METHOD OF HANGING LAUNDRY ITEMS IN A CLIP
ÉPINGLE À LINGE ET PROCÉDÉ DE SUSPENSION DE LINGE À UNE ÉPINGLE

(30) Priorität: 05.02.2016 DE 102016001298
(43) Veröffentlichungstag der Anmeldung: 04.03.2020
(62) Teilanmeldung aus: 16002702.5
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A1- 2 942 432
- CN-A- 103 668 893
- CN-A- 104 180 175
- CN-U- 203 200 548
- DE-A1- 3 228 643
- DE-U1- 8 813 421
- KR-A- 20110 051 486

## Beschreibung

Die Erfindung betrifft eine Klammer für Wäschestücke gemäß dem Oberbegriff des Anspruchs 1 und ein Verfahren zum Einhängen von Wäschestücken in eine Klammer gemäß dem Oberbegriff des Anspruchs 8.

In Wäschereien werden Wäschestücke von Bedienungspersonen in Klammern von Wäschereimaschinen und Transportsystemen zum Transport von Wäschestücken zu Wäschereimaschinen eingegeben.

Die Kammern verfügen über einseitig offene Klammermäuler, in die Abschnitte, beispielsweise Ecken bzw. Eckbereiche, der Wäschestücke von den Bedienungspersonen zielgerichtet eingeschoben werden müssen. In manchen Fällen müssen von der Bedienungsperson gegenüberliegende Eckbereiche einer Kante der Wäschestücke in aufeinanderfolgende Klammern eingehängt werden. Dabei müssen die Eckbereiche in einer vorgegebenen, meist unterschiedlichen Orientierung oder Ausrichtung in die aufeinanderfolgenden Klammern eingehängt werden. Manche Wäschereimaschinen, insbesondere Eingabemaschinen, verfügen über mehrere Klammern, wobei die Bedienungspersonen gegenüberliegende Eckbereiche des jeweiligen Wäschestücks abwechselnd in ein bestimmtes Klammerpaar einhängen müssen. In der Praxis hat sich gezeigt, dass es den Bedienungspersonen Probleme bereitet, die genannten Anforderungen beim Einhängen der Wäschestücke in die Klammern zu erfüllen.

Aus der CN 203 200 548 U ist eine Haushaltswäscheklammer mit einem Haken zum manuellen Aufhängen der Wäscheklammer auf eine Wäscheleine bekannt. Der Klammer ist eine von einer Batterie gespeiste LED-Lampe zugeordnet. Die Batterie wird von Solarpaneelen aufgeladen. Bei dieser Haushaltswäscheklammer dient die Lampe dazu, im Dunkeln anzuzeigen, wo sich die Haushaltswäscheklammer befindet.

Die CN 103 608 893 A offenbart eine Klammer mit einem LED-Licht, das von einer Batterie mit elektrischer Energie versorgbar ist. Die Klammer dient zur Aufhellung des LED-Lichts in einer Garderobe, um im Dunkeln das Innere der Garderobe auszuleuchten.

Eine Klammer mit den Merkmalen des Oberbegriffs des Anspruchs 1 ist aus DE 88 13 421 U1 bekannt.

Der Erfindung liegt die Aufgabe zugrunde, ein Verfahren und eine Klammer zu schaffen, die es der Bedienungsperson ermöglicht, Wäschestücke in Klammern von Wäschereimaschinen einfach und richtig einzuhängen.

Eine Klammer zur Lösung dieser Aufgabe weist die Merkmale des Anspruchs 1 auf. Bei dieser Klammer ist es vorgesehen, dass der Klammer, insbesondere dem Klammerkörper, wenigstens ein Leuchtmittel direkt zugeordnet ist. Dann ist das mindestens eine Leuchtmittel ortsfest im oder am Klammerkörper der jeweiligen Klammer angeordnet. Das Leuchtmittel und das von diesem erzeugte Licht wandern dann mit der üblicherweise weitertransportierten Klammer mit. Zumindest erhellt das mindestens eine Leuchtmittel die Klammer und gibt dadurch der jeweiligen Bedienungsperson eine das Eingeben des jeweiligen Wäschestücks in die Klammer erleichternde Orientierung und/oder das jeweilige Leuchtmittel gibt der Bedienungsperson eine andersgeartete Orientierungshilfe. Dazu ist das mindestens eine Leuchtmittel so der jeweiligen Klammer direkt zugeordnet, dass ihre Lichtstrahlen, insbesondere gebündelten oder fokussierten Lichtstrahlen, eine gezielte Richtung aufweisen. Dadurch kann der Bedienungsperson beispielsweise die Einschubrichtung des Wäschestücks in die Klammer visuell angegeben werden, wodurch der Bedienungsperson eine von gegebenenfalls mehreren Orientierungen zur Erleichterung des Eingebens bzw. richtigen Eingebens des Wäschestücks in die jeweilige Klammer zur Verfügung gestellt wird.

Das mindestens eine Leuchtmittel dient nur oder unter anderem dazu, ein Klammermaul zu beleuchten und/oder anzuleuchten. Dadurch wird der Bedienungsperson vom Licht des Leuchtmittels das Einschieben des Wäschestücks, vorzugsweise eines Abschnitts desselben wie zum Beispiel einen Eckbereich, erleichtert, indem das vom Leuchtmittel erzeugte Licht der Bedienungsperson einen Pfad zum Einschieben des betreffenden Abschnitts des Wäschestücks in das Klammermaul der jeweiligen Klammer weist.

Das mindestens eine Leuchtmittel der Klammer dient dazu oder nicht nur dazu, die Klammer bzw. das Klammermaul zu erhellen bzw. zu beleuchten; vielmehr erfüllt das mindestens eine Leuchtmittel wenigstens eine weitere Zusatzfunktion oder eine andere Funktion. Beispielsweise kann vom mindestens einen Leuchtmittel angezeigt werden, in welcher Orientierung bzw. in welcher Richtung das Wäschestück, insbesondere ein Eckbereich desselben, von der Bedienungsperson in die jeweilige Klammer eingegeben werden muss und/oder in welche von mehreren Klammern das Wäschestück, insbesondere ein Abschnitt desselben, als nächstes einzugeben ist. Dadurch werden Fehler bei der Eingabe zuverlässig vermieden.

Eine andere Ausgestaltungsmöglichkeit der Klammer sieht es vor, dass das mindestens eine Leuchtmittel ein getaktetes oder ungetaktetes Licht erzeugt. Getaktete Leuchtmittel erzeugen ein periodisch unterbrochenes Licht, wobei das Lichtmuster zwischen Hell- und Dunkelphasen beliebig sein kann. Ein ungetaktetes Leuchtmittel erzeugt hingegen ein kontinuierliches, ununterbrochenes Licht während der gesamten Dauer, in der es gebraucht wird.

Das jeweilige Leuchtmittel erzeugt bevorzugt einen Lichtstrahl, beispielsweise einen gebündelten Lichtstrahl, der über seine Länge einen etwa gleichen Querschnitt aufweist oder einen fokussierten Lichtstrahl. Wenn die Leuchtmittel nur zur Beleuchtung der Klammern dienen sollen, handelt es sich bei den Lichtstrahlen vorzugsweise um diffuse Lichtstrahlen bzw. Lichtkegel. Es ist auch denkbar, dass unterschiedliche Leuchtmittel voneinander abweichende Lichtstrahlen erzeugen, beispielsweise gebündelte Lichtstrahlen einerseits oder Lichtkegel andererseits.

Bei einer besonders vorteilhaften Ausgestaltung der Klammer ist es vorgesehen, dass das mindestens eine Leuchtmittel der Klammer so zugeordnet ist, dass das von diesem erzeugte Licht, und zwar die Richtung des Lichts, gegebenenfalls die Taktung des Lichts und/oder die Farbe oder Helligkeit des Lichts von der jeweiligen Bedienungsperson wahrnehmbar ist. Dadurch kann die jeweilige Bedienungsperson die Richtung oder eine sonstige aus der Ausgestaltung des Lichts hervorgehende Information wahrnehmen und zur Orientierung verwenden.

Beispielsweise kann das wenigstens eine Leuchtmittel derart der Klammer, insbesondere dem Klammerkörper, direkt zugeordnet sein, dass es das Klammermaul, vorzugsweise ein offenes Ende desselben und/oder die Richtung desselben, markiert und/oder erhellt. Das erleichtert der Bedienungsperson das Eingeben des jeweiligen Wäschestücks in die betreffende Klammer.

Eine vorteilhafte Weiterbildung sieht es vor, dass vom wenigstens einen Leuchtmittel bewegte Lichtstrahlen und/oder Lichtstrahlen wechselnder Richtungen erzeugbar sind. Die Lichtstrahlen können dann für die Bedienungsperson weg- oder richtungsweisend sein. Dadurch erhält die Bedienungsperson eine Orientierungshilfe beim Zuführen des Wäschestücks zur Klammer und beim Eingeben in dieselbe. Besonders vorteilhaft ist es bei mehreren der Klammer zugeordneten Leuchtmitteln, wenn diese bewegte Lichtstrahlen und/oder Lichtstrahlen wechselnder Richtungen erzeugen. Die Lichtstrahlen können dann insbesondere in ihrer Kombination nach Art eines Pfeils wirken oder insbesondere dann, wenn die mehreren Lichtstrahlen bewegt werden, einen Lichtweg oder Pfad vorzeigen bzw. angeben, der der jeweiligen Bedienungsperson nicht nur eine Richtung, sondern alternativ oder zusätzlich einen Weg vorgibt und dadurch die Lichtquellen nicht nur Licht erzeugen, sondern auch der Bedienungsperson anschaulich eine gegebenenfalls zusätzliche, visualisierte Arbeitsanweisung geben.

Des Weiteren ist es vorgesehen, der jeweiligen Klammer direkt mehrere Leuchtmittel zuzuordnen. Dadurch ist es möglich, nur ausgesuchte Leuchtmittel zu aktivieren, so dass nur ein Leuchtmittel Licht erzeugt oder einige Leuchtmittel Licht erzeugen. So erhält die jeweilige Bedienungsperson eine gegebenenfalls weitere Orientierungshilfe, insbesondere eine Anweisung. Beispielsweise kann der Bedienungsperson so visuell dargestellt werden, in welcher Richtung oder wo sie das Wäschestück in die Klammer, insbesondere das Klammermaul derselben, einzuschieben hat.

Ein Verfahren zur Lösung der eingangs genannten Aufgabe weist die Maßnahmen des Anspruchs 8 auf. Demnach wird durch mindestens ein Leuchtmittel der oder jeder Bedienungsperson eine Orientierung für das Eingeben des betreffenden Wäschestücks in die Klammer vorgegeben. Das mindestens eine Leuchtmittel dient dadurch als visuelle Orientierungshilfe. Eine solche visuelle Orientierungshilfe ist vor allem in Wäschereien mit einem hohen Geräuschpegel und auch wenn wegen des hohen Geräuschpegels die jeweilige Bedienungsperson einen Lärmschutz trägt, hilfreich.

Des Weiteren ist es vorgesehen, von mindestens einem Leuchtmittel das Klammermaul zu erhellen bzw. zu beleuchten und zusätzlich der jeweiligen Bedienungsperson anzuzeigen, in welche Klammer das jeweilige Wäschestück einzugeben ist oder in welcher Richtung das Wäschestück oder der Abschnitt derselben in das Klammermaul der Klammer eingeschoben werden muss. Hierdurch werden Fehlbedienungen durch falsches Eingeben des Wäschestücks, beispielsweise falsche Orientierung des in das Klammermaul einzugebenden Abschnitts des Wäschestücks, zuverlässig vermieden.

Gegebenenfalls kann das mindestens eine Leuchtmittel auch anzeigen, in welcher Orientierung das jeweilige Wäschestück bzw. ein Abschnitt desselben in die Klammer, vorzugsweise das Klammermaul derselben, einzugeben ist.

Bei einer besonders vorteilhaften Ausgestaltungsmöglichkeit des Verfahrens ist es vorgesehen, dass das jeweilige Leuchtmittel der jeweiligen Bedienungsperson in mehrfacher Hinsicht eine Orientierung gibt, und zwar nicht nur die jeweilige Klammer, insbesondere das dieser zugeordnete Klammermaul, erhellt, sondern der Bedienungsperson zusätzlich oder auch nur alternativ visuelle Informationen vermittelt. Je nach Anzahl der Leuchtmittel, der Lichtfarbe, der Modulation bzw. Taktung, der Anzahl der Leuchtmittel pro Klammer, die Art des Lichtstrahls, die Richtung des Lichtstrahls und/oder der Bewegung des mindestens einen Lichtstrahls, können der jeweiligen Bedienungsperson eine oder vorzugsweise gleich mehrere visuelle Information gegeben werden, wodurch die jeweilige Bedienungsperson mindestens eine Orientierung, insbesondere Orientierungshilfe, erhält.

Das vereinfacht das Beschicken der jeweiligen Klammer mit einem Wäschestück, insbesondere einem Abschnitt desselben. Außerdem kann zusätzlich die Eingabeleistung erhöht werden. Schließlich können falsche Eingaben des Wäschestücks, beispielsweise durch in falscher Richtung erfolgendes Einhängen derselben in die Klammer, zuverlässig vermieden werden.

Eine vorteilhafte Ausgestaltungsmöglichkeit des Verfahrens sieht es vor, durch mehrere unterschiedliche Stellen der jeweiligen Klammer zugeordnete Leuchtmittel der Bedienungsperson eine Orientierung vorzugeben. Durch die mehreren Leuchtmittel der Klammer kann durch Aktivieren, nämlich Einschalten, eines bestimmten Leuchtmittels der Bedienungsperson beispielsweise visualisiert angegeben werden, von welcher Seite sie das Wäschestück in die Klammer einzugeben hat und/oder auf welcher Seite der Klammer sich die offene Seite des Klammermauls befindet. Die mehreren Leuchtmittel an unterschiedlichen Stellen können aber auch derart zusammenwirken, dass sie der betreffenden Bedienungsperson eine Richtung angeben oder sogar eine Bahn aufzeigen, längs derer das Wäschestück in die Klammer einzuschieben ist. Auf diese Weise erhält die jeweilige Bedienungsperson von den mehreren Leuchtmitteln eine visuelle, räumliche Anweisung, was der Bedienungsperson die Orientierung besonders anschaulich vorgibt. Die jeweilige Bedienungsperson erhält so nach Art eines Leuchtturms eine visuelle Anweisung, die eine Orientierungshilfe zur richtigen Eingabe des Wäschestücks bzw. eines Abschnitts oder Eckbereichs in die Klammer vorgibt und somit den Eingabevorgang des Wäschestücks in die Klammer besonders erleichtert und/oder vereinfacht.

Besonders vorteilhaft ist es, wenn das Leuchtmittel von einer Leuchtdiode (LED) oder einem Array von Leuchtdioden gebildet ist. Eine andere vorteilhafte Ausgestaltungsform des Leuchtmittels besteht in der Bildung des Leuchtmittels aus einem Laserstrahl mit einem für das menschliche Auge unschädlichen Licht- und/oder Energiedichte. Vor allem ein als Laser ausgebildetes Leuchtmittel erzeugt einen langen und auf die gesamte Länge gebündelten, insbesondere einen konstanten Querschnitt aufweisenden, deutlich sichtbaren Laserstrahl. Darüber hinaus eignen sich aber auch andere handelsübliche Leuchtmittel zur Realisierung der Erfindung.

Bevorzugte Ausführungsbeispiele der Erfindung werden nachfolgend anhand der Zeichnung näher erläutert. In dieser zeigen:
- Fig. 1: eine perspektivische Prinzipdarstellung einer Eingabemaschine im Bereich ihrer Spreizeinrichtung, und
- Fig. 2: eine Seitenansicht einer in einen Transportbügel integrierten Klammer.

Jede der vorzugsweise gleich ausgebildeten Klammern verfügt über einen Klammerkörper mit einem offenen, insbesondere nach schräg unten offenen, Klammermaul. Dem Klammermaul der Klammer ist ein federvorgespannter Klemmhebel zugeordnet, der nach dem manuellen Einschieben eines Abschnitts des Wäschestücks in das Klammermaul infolge seiner Federvorspannung den Abschnitt des Wäschestücks im Klammermaul der Klammer festklemmt.

Die Erfindung sieht es vor, den Klammern Leuchtmittel zuzuordnen. Mindestens ist jeder Klammer ein Leuchtmittel zugeordnet. Das jeweilige Leuchtmittel ist direkt der jeweiligen Klammer zugeordnet.

Die Leuchtmittel können verschiedenartige Lichtstrahlen abgeben, und zwar diffuse, gebündelte und/oder fokussierte Lichtstrahlen. Bei den gezeigten Ausführungsbeispielen geben die Leuchtmittel einen im Wesentlichen gebündelten Lichtstrahl mit gleichem oder nahezu gleichem Querschnitt über seine Länge ab. Solche Lichtstrahlen eignen sich besonders vorteilhaft zu visuellen Anzeige- und Beleuchtungszwecken und geben dadurch der Bedienungsperson eine eindeutige Orientierungshilfe, insbesondere hinsichtlich der Richtung zum Einschieben des jeweiligen Eckbereichs des Wäschestücks in das Klammermaul der Klammer.

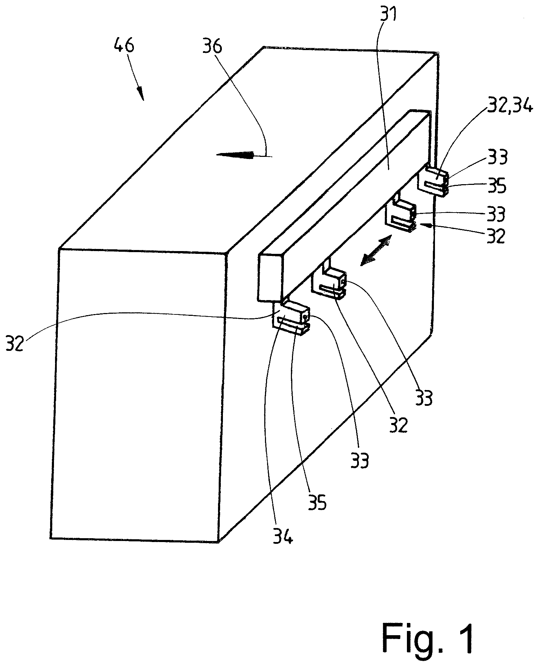

Die Fig. 1 zeigt ein Ausführungsbeispiel, bei dem die Erfindung an einer nur schematisch dargestellten Eingabemaschine 46 realisiert ist. Die Eingabemaschine 46 dient dazu, in der Fig. 1 nicht gezeigte Wäschestücke auszubreiten und einer nachfolgenden Wäschebehandlungsmaschine, vorzugsweise einer Mangel, zuzuführen. An der in Eingaberichtung 36 gesehen vorderen Seite der Eingabemaschine 46 ist eine Spreizeinrichtung 31 vorgesehen, die im gezeigten Ausführungsbeispiel über vier vorzugsweise gleiche Klammern 32 verfügt. Im Fachjargon werden diese Klammern 32 als Spreizklammern bezeichnet. Die Klammern 32 sind quer zur Eingaberichtung 36 zusammen- und auseinanderfahrbar zum Ausspreizen bzw. Ausstrecken eines von jeweils einem Paar Klammern 32 an gegenüberliegenden Eckbereichen gehaltenen vorderen Rands eines Wäschestücks. Die Erfindung eignet sich nicht nur für die gezeigte Eingabemaschine 46 mit vier Klammern 32. Sie eignet sich auch für Eingabemaschinen 46 mit einer geringeren oder größeren Anzahl von Klammern 32.

Die Eingabemaschine 46 verfügt aus mehreren Gründen über mehr als zwei Klammern 32. Zum einen können mehr als zwei Klammern 32 vorgesehen sein, damit mehrere Bedienungspersonen gleichzeitig an der Eingabemaschine 46 arbeiten können. Alternativ oder zusätzlich können die mehreren Klammern 32 auch dazu dienen, die Eingabemaschine 46 ein- oder mehrbahnig zu betreiben. Der einbahnige Betrieb erfolgt bei großen Wäschestücken, die nahezu die ganze Arbeitsbreite der Eingabemaschine 46 und vor allem der nachgeordneten Mangel benötigen, während kleinere Wäschestücke zweibahnig oder auch mehr als zweibahnig nebeneinander und unabhängig voneinander eingegeben werden können. Viele Eingabemaschinen 30 lassen einen wechselweisen einbahnigen oder mehrbahnigen oder auch gemischten ein- oder mehrbahnigen Betrieb zu. Das erfordert es, dass die Klammern 32, also die Spreizklammern, in der richtigen Abfolge bzw. Reihenfolge von der jeweiligen Bedienungsperson beschickt werden durch Einhängen der richtigen Eckbereiche des jeweiligen Wäschestücks in die momentan freien und die erforderliche Eingabeweise zulassenden Klammern.

In der Fig. 1 sind symbolisch Leuchtmittel 33 dargestellt. Jeweils ein Leuchtmittel 33 ist an einer Vorderseite jeder Klammer 32 angeordnet. An dieser Vorderseite ist ein sich im Klammerkörper 34 der Klammer 32 erstreckendes Klammermaul 35 offen. Das einzige Leuchtmittel 33 jeder Klammer 32 kann dazu dienen, der Bedienungsperson anzuzeigen, welche beiden Klammern 32 bereit sind zur Aufnahme gegenüberliegender Eckbereiche einer Vorderkante des nächsten Wäschestücks. Dazu kann es reichen, dass das jeweilige Leuchtmittel 33 nur eine Signalfunktion ausübt, also nicht oder nicht vorrangig zu Beleuchtungszwecken dient. Ein nur Signalzwecke zu erfüllendes Leuchtmittel 33 jeder Klammer 32 braucht nur wenig Licht abzustrahlen. Das auch, damit es infolge der Anordnung an den Vorderseiten der Klammern 32 die Bedienungsperson nicht blendet. Es kann schon ein kleiner Lichtpunkt ausreichen.

Die Leuchtmittel 33 können der Bedienungsperson mehrere Signale geben. Wenn beispielsweise den Klammern 32 Leuchtmittel 33 zugeordnet sind, die Licht unterschiedlicher Farben, beispielsweise Rot und Grün, abgeben können, erhält die Bedienungsperson die erste Information dahingehend, dass das nächste Wäschestück in die beiden Klammern 32 einzugeben ist, deren Leuchtmittel 33 leuchten, während die Leuchtmittel 33 der anderen beiden Kammern 32 nicht aktiviert sind, also dunkel bleiben. Ein rotes Leuchtmittel 33 der einen Klammer 32 und ein grünes Leuchtmittel der anderen Klammer 32 des jeweils zur Eingabe heranzuziehenden Klammerpaars können der Bedienungsperson auch noch anzeigen, welche Ecke des jeweiligen Wäschestücks in die eine oder andere Klammer 32 des Klammerpaars einzugeben ist.

Es ist eine Abwandlung des Ausführungsbeispiels der Fig. 1 denkbar, bei dem die Leuchtmittel 33 an anderen Stellen der Klammern 32 zugeordnet sind, beispielsweise dem Klammermaul 35 der jeweiligen Klammer 32. Dann wird das Klammermaul 35 der beiden Klammern 32 eines als nächstes mit einem Wäschestück zu beschickenden Klammerpaar von den diesen zugeordneten Leuchtmitteln 33 beleuchtet, um der Bedienungsperson das Klammermaul 35 anzuzeigen und das Einschieben des Eckbereichs des jeweiligen Wäschestücks in das Klammermaul 35 der betreffenden Klammer 32 zu erleichtern. Gleichzeitig bekommt die Bedienungsperson eine Orientierung derart, dass sie das Wäschestück in diejenigen Klammern 32 des Klammerpaars einzugeben hat, deren Klammermäuler 35 von den Leuchtmitteln 33 beleuchtet sind. Auch hier können die Klammermäuler 35 der Klammern 32 des mit dem nächsten Wäschestück zu beschickenden Klammerpaars unterschiedlich beleuchtet werden, und zwar durch unterschiedliche Farben abgebende Leuchtmittel 33 und/oder gepulste Leuchtmittel 32, die getaktet Licht abgeben mit aufeinanderfolgenden Leucht- und Dunkelphasen.

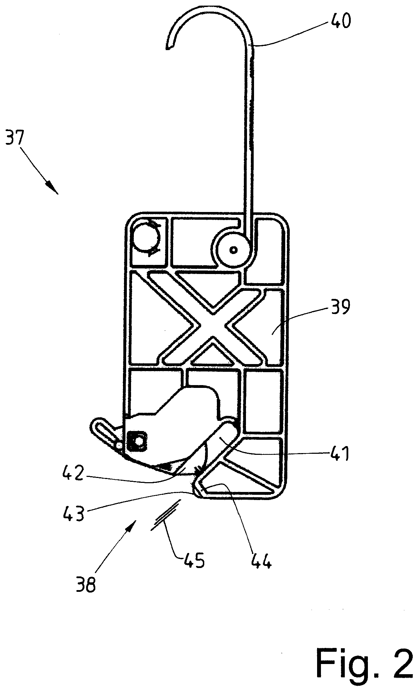

Die Fig. 2 zeigt eine andere Realisierung der Erfindung an einem Transportbügel 37 mit einer in diesen integrierten Klammer 38. Der Transportbügel 37 verfügt über ein Gehäuse 39 mit einem am oberen Ende desselben angeordneten Bügelhaken 40. Mit dem Bügelhaken 40 ist der Transportbügel 37 an einer eine Transportstrecke vorgebenden Schiene oder Stange aufgehängt. Der Transportbügel 37 wird längs der Transportstrecke durch einen der Schiene bzw. der Stange zugeordneten Förderstrang weiterbewegt. Bei abwärtsgeneigten Förderstrecken kann der Transportbügel 37 auch selbsttätig schwerkraftbedingt in der Schiene oder der Stange entlanggleiten.

Bei der in den Transportbügel 37 integrierten Klammer 38 ist das Klammergehäuse vom Gehäuse 39 des Transportbügels 37 gebildet. In diesem Gehäuse 39 befindet sich ein Klammermaul 41, das im in der Fig. 2 gezeigten Ausführungsbeispiel (in Richtung der von außen zugänglichen Öffnungen gesehen) schräg nach oben verlaufend sich im Gehäuse 39 befindet, so dass das offene Ende des Klammermauls 41 etwa im Bereich einer unteren Ecke des die Klammer aufnehmenden Gehäuses 39 liegt. Dem Klammermaul 41 ist ein um eine horizontale Achse schwenkbarer und federvorgespannter Klemmhebel 42 zugeordnet. Die Federvorspannung des Klemmhebels 42 ist derart, dass dieser selbsttätig in seine einen Abschnitt des Wäschestücks im Klammermaul 41 fixierende Klemmstellung bewegbar ist.

Dem Transportbügel 37 ist im gezeigten Ausführungsbeispiel ein einziges Leuchtmittel 43 zugeordnet. Bei dem in der Fig. 2 gezeigten Transportbügel 37 befindet sich das Leuchtmittel 43 unterhalb des offenen Endes des Klammermauls 41, und zwar vorzugsweise vor einer V-förmigen unteren Begrenzungsstelle 44 des offenen Endes des Klammermauls 41. Das Leuchtmittel 43 ist der Begrenzungsstelle 44 des Gehäuses 39 derart zugeordnet, dass es einen Lichtstrahl 45 erzeugt oder abgibt, der etwa parallel zur Richtung des Klammermauls 41 verläuft, und zwar etwas unterhalb desselben. Außerdem kann die offene Seite des Klammermauls 41 vom Leuchtmittel 43 beleuchtet werden, wenn das Leuchtmittel 43 zur Abgabe eines entsprechend hellen Lichtstrahls 45 ausgebildet ist.

Auch das Leuchtmittel 43 kann zur Abgabe von Licht bestimmter Farbe ausgebildet sein, wobei bevorzugt eine solche Farbe gewählt wird, die für die Bedienungsperson besonders angenehmen ist und nicht blendet. Ebenso ist es alternativ oder zusätzlich denkbar, das Leuchtmittel 43 zu takten, so dass es einen unterbrochenen Lichtstrahl 45 abgibt.

Es ist denkbar, dem Transportbügel 37 mehrere Leuchtmittel zuzuordnen, beispielsweise ein zweites Leuchtmittel oberhalb des offenen Endes des Klammermauls 41. Der Bedienungsperson wird dann von den beiden Lichtstrahlen, die die Leuchtmittel erzeugen, ein Einschubpfad vorgegeben, woran sie sich beim Einschieben des Bereichs des Wäschestücks in das Klammermaul 41 der Klammer 38 orientieren kann. Bei zwei auf gegenüberliegenden Seiten des offenen Endes des Klammermauls 41 angeordneten Leuchtmitteln ist es vorteilhaft, dass die Leuchtmittel Lichtstrahlen unterschiedlicher Farben abgeben. Denkbar ist es aber auch, dass die Lichtstrahlen nicht parallel verlaufen, sondern in Richtung zur Bedienungsperson divergierend, so dass die Leuchtmittel der Bedienungsperson einen Einschubtrichter zum Einschieben des Wäschestücks in das Klammermaul 41 vorgeben.

Es kann auch vorgesehen sein, dem Transportbügel 37 ein Leuchtmittel oder mehrere Leuchtmittel an ganz anderen Stellen zuzuordnen, beispielsweise innerhalb des Klammermauls 41 und/oder vor dem Klammermaul 41, so dass der Lichtstrahl des jeweiligen Leuchtmittels in das Klammermaul 41 bzw. die offene Seite desselben gerichtet ist.

Die Energieversorgung des mindestens einen Leuchtmittels 43 des Transportbügels 43 erfolgt durch zum Beispiel mindestens eine im Gehäuse 39 des Transportbügels 37 untergebrachte Batterie, vorzugsweise einen Akkumulator, oder von außen, wobei der üblicherweise aus leitfähigem Metall bestehende Bügelhaken 40 als ein Leiter dienen kann. Es ist dann ein zusätzlicher Schleifer oder dergleichen vorgesehen, der an einem zweiten elektrisch isolierten Leiter der Transportschiene entlanggleitet.

Die Leuchtmittel 33 bzw. 43 aller zuvor beschriebenen Ausführungsbeispiele der Erfindung sind bevorzugt gebildet von Leuchtdioden (LED's) oder Laser, und zwar vor allem schwache Markierungslaser, die aufgrund ihrer Energiedichte keine schädigenden Einflüsse auf die Augen der Bedienungsperson ausüben. Als Leuchtdioden ausgebildete Leuchtmittel 33, 43 zeichnen sich durch einen geringen Energieverbrauch aus, so dass sie über eine lange Zeit hinweg mit einer Batterie betrieben werden können. Gleiches gilt für Markierungslaser geringer Energiedichte. Es ist aber auch denkbar, die Leuchtmittel 33, 43 durch konventionelle Glühbirnen, vorzugsweise solche mit geringer Leistung, die zu Signal-, Markierungs- und/oder auch Orientierungszwecken ausreichen, zu bilden.

Denkbar ist es auch, die Leuchtmittel 33, 43 so auszubilden oder ihnen Linsen zuzuordnen, dass sie einen Lichtstrahl 45 gewünschter Gestalt erzeugen. Bevorzugt sind gebündelte oder fokussierte Lichtstrahlen 45. Diese eignen sich besonders, wenn die Leuchtmittel 33, 43 nur oder auch dazu dienen sollen, einer jeweiligen Bedienungsperson Orientierungshilfen zu geben, aber nicht vorrangig zu Beleuchtungszwecken dienen sollen. Andererseits können auch Leuchtmittel 33, 43 mit diffusen Lichtstrahlen vorgesehen sein, wenn die Leuchtmittel 33, 43 nur oder vorwiegend zu Beleuchtungszwecken dienen sollen.

### Bezugszeichenliste:

- 31: Spreizeinrichtung
- 32: Klammer
- 33: Leuchtmittel
- 34: Klammerkörper
- 35: Klammermaul
- 36: Eingaberichtung
- 37: Transportbügel
- 38: Klammer
- 39: Gehäuse
- 40: Bügelhaken
- 41: Klammermaul
- 42: Klemmhebel
- 43: Leuchtmittel
- 44: Begrenzungsstelle
- 45: Lichtstrahl
- 46: Eingabemaschine

## Patentansprüche

1. Klammer für Wäschestücke mit einem Klammerkörper (34), dem ein Laufwagen oder ein Bügelhaken (40) zugeordnet ist, der Klammerkörper (34) mindestens ein Klammermaul (35, 41) aufweist, dem ein Klemmorgan zugeordnet ist, und die Klammer (32, 38) wenigstens ein Leuchtmittel (33, 43) aufweist, **dadurch gekennzeichnet, dass** das mindestens eine Leuchtmittel (33, 43) ortsfest in oder am Klammerkörper (34) angeordnet ist, dass das wenigstens eine Leuchtmitel (33, 43) zur Erzeugung eines gerichteten und gebündelten oder fokussierten Lichtstrahls (45) ausgebildet ist, wobei der Lichtstrahl (45) derart gerichtet ist, dass er der Bedienungsperson die Einschubrichtung eines Abschnitts des Wäschestücks in das Klammermaul (35, 41) visualisiert, dass mindestens ein Leuchtmittel (33, 43) die Klammer (32, 38) erhellt und dadurch der jeweiligen Bedienungsperson eine das Eingeben des jeweiligen Wäschestücks in die Klammer (32, 38) erleichternde Orientierung gibt, indem vom mindestens einen Leuchtmittel (33 ,43) anzeigbar ist, in welcher Orientierung bzw. in welcher Richtung das Wäschestück von der Bedienungsperson in die jeweilige Klammer (32, 38) eingegeben werden muss oder in welche von mehreren Klammern (32, 38) ein Abschnitt des Wäschestücks als nächstes einzugeben ist.

2. Klammer nach Anspruch 1, **dadurch gekennzeichnet, dass** das mindestens eine Leuchtmittel (33, 43) getaktetes oder ungetaktetes Licht erzeugt.

3. Klammer nach Anspruch 1 oder 2, **dadurch gekennzeichnet, dass** das wenigstens eine Leuchtmittel (33, 43) dem Klammerkörper (34) direkt derart zugeordnet ist, dass es von einer Bedienungsperson oder mehreren Bedienungspersonen wahrnehmbar ist.

4. Klammer nach einem der vorhergehenden Ansprüche, **dadurch gekennzeichnet, dass** das mindestens eine Leuchtmittel (33, 43) zur Abgabe von Lichtsignalen ausgebildet ist, insbesondere derart dem Klammerkörper (34) direkt zugeordnet ist, dass es das Klammermaul (35, 41), vorzugsweise ein offenes Ende desselben, markiert und/oder erhellt.

5. Klammer nach einem der vorhergehenden Ansprüche, **dadurch gekennzeichnet, dass** von wenigstens einem Leuchtmittel (33, 43) bewegte Lichtstrahlen (45) und/oder Lichtstrahlen (45) wechselnder Richtungen erzeugbar sind und/oder das mindestens eine Leuchtmittel (33, 43) derart bewegbar ist, dass es bewegte Lichtstrahlen (45) bzw. Lichtstrahlen (45) wechselnder Richtungen erzeugt.

6. Klammer nach einem der vorhergehenden Ansprüche, **dadurch gekennzeichnet, dass** dem Klammerkörper (34) mehrere Leuchtmittel (33 ,43), vorzugsweise unterschiedlicher Lichtfarbe und/oder unterschiedlicher Leuchttakte, direkt zugeordnet sind.

7. Klammer nach einem der vorhergehenden Ansprüche, **dadurch gekennzeichnet, dass** mindestens einige der mehreren dem jeweiligen Klammerkörper (34) zugeordneten Leuchtmittel (33, 43) abwechselnd aktivierbar sind bzw. abwechselnd leuchten.

8. Klammer nach einem der vorhergehenden Ansprüche, **dadurch gekennzeichnet, dass** mindestens einige der mehreren Klammerkörper (34) zugeordneten Leuchtmittel (33, 43) Licht unterschiedlicher Lichtfarbe und/oder unterschiedlich getaktetes Licht abgeben bzw. erzeugen.

9. Verfahren zum Einhängen von Wäschestücken in eine Klammer (32, 38) von Transportsystemen in Wäschereien oder Wäschereimaschinen, wobei von mindestens einer Bedienungsperson ein Abschnitt des jeweiligen Wäschestücks in die jeweilige Klammer (32, 38) eingegeben wird, **dadurch gekennzeichnet, dass** durch mindestens ein der jeweiligen Klammer (32, 38) direkt zugeordnetes Leuchtmittel (33, 43) der Bedienungsperson eine Orientierung zum Einhängen des betreffenden Wäschestücks in die Klammer (32, 38) gegeben bzw. vorgegeben wird, indem von dem mindestens einen Leuchtmittel (33, 43) die jeweilige Klammer (32, 38) erhellt wird und der jeweiligen Bedienungsperson angezeigt wird, in welche Klammer (32, 38) der Abschnitt des jeweiligen Wäschestücks einzuschieben ist oder in welcher Richtung der betreffende Abschnitt des jeweiligen Wäschestücks in das Klammermaul (35, 41) der betreffenden Klammer (32, 38) eingeschoben werden muss.

10. Verfahren nach Anspruch 9, **dadurch gekennzeichnet, dass** von dem mindestens einen der jeweiligen Klammer (32, 38) zugeordneten Leuchtmittel (33, 43) der Bereich eines Klammermauls (35, 41) der jeweiligen Klammer (32, 38) erhellt wird und/ oder durch die Anordnung, Ausrichtung, Lichtfarbe und/oder Taktung des mindestens einen den Klammern (32, 38) zugeordneten Leuchtmittels (33, 43) erzeugten Lichts und/ oder Lichtstrahls (45) der Bedienungsperson wenigstens eine Orientierung, insbesondere eine zusätzliche Orientierung, zur Verfügung gestellt und/oder vorgegeben wird.

11. Verfahren nach Anspruch 9 oder 10, **dadurch gekennzeichnet, dass** von dem mindestens einen Leuchtmittel (33, 43) die jeweilige Klammer (32, 38) erhellt wird und der jeweiligen Bedienungsperson angezeigt wird, in welcher Orientierung der Abschnitt des jeweiligen Wäschestücks in das Klammermaul (35, 41) der betreffenden Klammer (32, 38) einzuschieben ist.

12. Verfahren nach einem der Ansprüche 9 bis 11, **dadurch gekennzeichnet, dass** durch mehrere an unterschiedlichen Stellen der jeweiligen Klammer (32, 38) angeordnete Leuchtmittel (33, 43) der oder der jeweiligen Bedienungsperson wenigstens eine Orientierung für das Eingeben des jeweiligen Wäschestücks in die betreffende Klammer (32, 38) vorgegeben wird.

13. Verfahren nach einem der Ansprüche 9 bis 12, **dadurch gekennzeichnet, dass** der oder der jeweilige Lichtstrahl (45) von mindestens einem als Leuchtdiode oder Laser, insbesondere Markierungslaser mit geringer Energiedichte, ausgebildeten Leuchtmittel (33, 43) erzeugt wird.

## Claims

1. Clip for garments, having a clip body (34) to which a carriage or a hanger (40) is assigned, the clip body (34) has at least one clip jaw (35, 41) to which a clamping member is assigned, and the clip (32, 38) has at least one light-emitting means (33, 43), **characterized in that** the at least one light-emitting means (33, 43) is arranged fixedly in or on the clip body (34), that the at least one light-emitting means (33, 43) is designed to generate a directed and bundled or focused light beam (45), wherein the light beam (45) is directed such that it shows the operator the direction of insertion of a portion of the garment into the clip jaw (35, 41), that at least one light-emitting means (33, 43) lights the clip (32, 38) and thereby gives the respective operator an orientation that facilitates the insertion of the respective garment into the clip (32, 38), by virtue of the at least one light-emitting means (33, 43) being able to indicate the orientation or direction in which the garment should be inserted into the respective clip (32, 38) by the operator or into which one of multiple clips (32, 38) a portion of the garment should be inserted next.

2. Clip according to Claim 1, **characterized in that** the at least one lighting means (33, 43) generates clocked or unclocked light.

3. Clip according to Claim 1 or 2, **characterized in that** the at least one light-emitting means (33, 43) is assigned directly to the clip body (34) such that it is able to be perceived by an operator or multiple operators.

4. Clip according to one of the preceding claims, **characterized in that** the at least one light-emitting means (33, 43) is designed to output light signals, in particular is assigned directly to the clip body (34) such that it marks and/or lights the clip jaw (35, 41), preferably an open end thereof.

5. Clip according to one of the preceding claims, **characterized in that** moving light beams (45) and/or light beams (45) of alternating directions are able to be generated by at least one light-emitting means (33, 43) and/or the at least one light-emitting means (33, 43) is able to be moved such that it generates moving light beams (45) or light beams (45) of alternating directions.

6. Clip according to one of the preceding claims, **characterized in that** the clip body (34) is directly assigned multiple light-emitting means (33, 43), preferably of different light colour and/or different light clocking.

7. Clip according to one of the preceding claims, **characterized in that** at least some of the multiple light-emitting means (33, 43) assigned to the respective clip body (34) are able to be activated alternately or light up alternately.

8. Clip according to one of the preceding claims, **characterized in that** at least some of the multiple light-emitting means (33, 43) assigned to the clip body (34) output or generate light of different light colour and/or differently clocked light.

9. Method for hanging garments into a clip (32, 38) of transport systems in launderettes or launderette machines, wherein a portion of the respective garment is inserted into the respective clip (32, 38) by at least one operator, **characterized in that** an orientation for hanging the garment in question into the clip (32, 38) is given or specified to the operator by at least one light-emitting means (33, 43) assigned directly to the respective clip (32, 38) by virtue of the respective clip (32, 38) being lit by the at least one light-emitting means (33, 43) and the respective operator being shown the clip (32, 38) into which the section of the respective garment should be inserted or the direction in which the portion in question of the respective garment should be inserted into the clip jaw (35, 41) of the clip (32, 38) in question.

10. Method according to Claim 9, **characterized in that** the region of a clip jaw (35, 41) of the respective clip (32, 38) is lit by the at least one light-emitting means (33, 43) assigned to the respective clip (32, 38) and/or at least one orientation, in particular an additional orientation, is made available and/or specified to the operator by the arrangement, orientation, light colour and/or clocking of the light and/or light beam (45) generated by the at least one light-emitting means (33, 43) assigned to the clips (32, 38).

11. Method according to Claim 9 or 10, **characterized in that** the respective clip (32, 38) is lit by the at least one light-emitting means (33, 43) and the respective operator is shown the orientation in which the portion of the respective garment should be inserted into the clip jaw (35, 41) of the clip (32, 38) in question.

12. Method according to one of Claims 9 to 11, **characterized in that** at least one orientation for the insertion of the respective garment into the clip (32, 38) in question is specified to the operator or the respective operator by multiple light-emitting means (33, 43) arranged at different locations of the respective clip (32, 38) .

13. Method according to one of Claims 9 to 12, **characterized in that** the light beam or the respective light beam (45) is generated by at least one light-emitting means (33, 43) designed as a light-emitting diode or laser, in particular a marking laser with low energy density.

## Revendications

1. Pince pour pièces de linge avec un corps de pince (34) auquel est associé un chariot ou un crochet de repassage (40), le corps de pince (34) présente au moins une mâchoire de pince (35, 41) à laquelle est associé un organe de serrage, et la pince (32, 38) présente au moins un moyen d'éclairage (33, 43),
**caractérisé en ce que** ledit au moins un moyen d'éclairage (33, 43) est disposé de manière stationnaire dans ou sur le corps de pince (34), **en ce que** ledit au moins un moyen d'éclairage (33, 43) est réalisé pour produire un faisceau lumineux (45) dirigé et concentré ou focalisé, le faisceau lumineux (45) étant dirigé de telle sorte qu'il montre à l'opérateur la direction d'insertion d'une partie de la pièce de linge dans la mâchoire de pince (35, 41), **en ce qu'**au moins un moyen d'éclairage (33, 43) éclaire la pince (32, 38) et indique ainsi à l'opérateur respectif une orientation facilitant l'introduction de la pièce de linge respective dans la pince (32, 38), par le fait qu'au moins un moyen d'éclairage (33, 43) peut indiquer dans quelle orientation ou dans quelle direction la pièce de linge doit être introduite par l'opérateur dans la pince (32, 38) respective ou dans laquelle de plusieurs pinces (32, 38) une partie de la pièce de linge doit ensuite être introduite.

2. Pince selon la revendication 1, **caractérisée en ce que** ledit au moins un moyen d'éclairage (33, 43) produit une lumière cadencée ou non cadencée.

3. Pince selon la revendication 1 ou 2, **caractérisée en ce que** ledit au moins un moyen d'éclairage (33, 43) est directement associé au corps de pince (34) de telle sorte qu'il puisse être perçu par un opérateur ou plusieurs opérateurs.

4. Pince selon l'une quelconque des revendications précédentes, **caractérisée en ce que** ledit au moins un moyen d'éclairage (33, 43) est réalisé pour sortir des signaux lumineux, **en ce qu'**il est en particulier associé directement au corps de pince (34) de façon à marquer et/ou éclairer la mâchoire de pince (35, 41), de préférence une extrémité ouverte de celle-ci.

5. Pince selon l'une quelconque des revendications précédentes, **caractérisée en ce qu'**au moins l'un des moyens d'éclairage (33, 43) peut produire des faisceaux lumineux (45) animés et/ou des faisceaux lumineux (45) de directions variables peuvent être générés par au moins un moyen d'éclairage et/ou ledit au moins un moyen d'éclairage (33, 43) peut être déplacé de façon à produire des faisceaux lumineux (45) animés ou des faisceaux lumineux (45) de directions variables.

6. Pince selon l'une quelconque des revendications précédentes, **caractérisée en ce que** plusieurs moyens d'éclairage (33, 43), ayant de préférence une couleur de lumière différente et/ou un cadencement d'éclairage différent, sont directement associés au corps de pince (34) .

7. Pince selon l'une quelconque des revendications précédentes, **caractérisée en ce qu'**au moins certains de la pluralité de moyens d'éclairage (33, 43) associés au corps de pince (34) respectif peuvent être activés en alternance ou s'allument en alternance.

8. Pince selon l'une quelconque des revendications précédentes, **caractérisée en ce qu'**au moins certains des multiples moyens d'éclairage (33, 43) associés à plusieurs corps de pince (34) sortent ou produisent une lumière ayant une couleur de lumière différente et/ou une lumière cadencée différemment.

9. Procédé permettant d'accrocher des pièces de linge à une pince (32, 38) de systèmes de transport dans des blanchisseries ou des machines de blanchisserie, au moins un opérateur introduisant une partie de la pièce de linge respective dans la pince (32, 38) respective,
**caractérisé en ce qu'**au moins un moyen d'éclairage (33, 43) directement associé à la pince (32, 38) respective, fournit ou spécifie à l'opérateur une orientation pour accrocher la pièce de linge en question à la pince (32, 38), par le fait que ledit au moins un moyen d'éclairage (33, 43) éclaire la pince (32, 38) respective et indique à l'opérateur respectif dans quelle pince (32, 38) la partie de la pièce de linge respective doit être insérée ou dans quelle direction la partie en question de la pièce de linge respective doit être insérée dans la mâchoire de pince (35, 41) de la pince (32, 38) en question.

10. Procédé selon la revendication 9, **caractérisé en ce que** ledit au moins un moyen d'éclairage (33, 43) associé à la pince (32, 38) respective éclaire la zone d'une mâchoire de pince (35, 41) de la pince (32, 38) respective, et/ou au moins une orientation, en particulier une orientation supplémentaire, est fournie et/ou spécifiée à l'opérateur par la disposition, l'orientation, la couleur de lumière et/ou le cadencement de la lumière produite et/ou du faisceau lumineux (45) produit par ledit au moins un moyen d'éclairage (33, 43) associé aux pinces (32, 38).

11. Procédé selon la revendication 9 ou 10, **caractérisé en ce que** ledit au moins un moyen d'éclairage (33, 43) éclaire la pince (32, 38) respective et indique à l'opérateur respectif dans quelle orientation la partie de la pièce de linge respective doit être insérée dans la mâchoire de pince (35, 41) de la pince (32, 38) en question.

12. Procédé selon l'une quelconque des revendications 9 à 11, **caractérisé en ce que** plusieurs moyens d'éclairage (33, 43) disposés à différents endroits de la pince (32, 38) respective permettent d'indiquer à l'opérateur ou à l'opérateur respectif au moins une orientation pour l'introduction de la pièce de linge respective dans la pince (32, 38) en question.

13. Procédé selon l'une quelconque des revendications 9 à 12, **caractérisé en ce que** ledit ou chaque faisceau lumineux (45) respectif est produit par au moins un moyen d'éclairage (33, 43) réalisé sous la forme d'une diode électroluminescente ou d'un laser, en particulier d'un laser de marquage de faible densité énergétique.
